# FASCICULE DE BREVET EUROPEEN

(11) **EP 1 018 636 B1**
(45) Date de publication et mention de la délivrance du brevet: **03.03.2004**
(21) Numéro de dépôt: 99403321.5
(22) Date de dépôt: 30.12.1999
(51) Int. Cl.: G01C 19/72

(54) **Gyroscope à fibre optique**
Optischer Faserkreisel
Optical fibre gyroscope

(30) Priorité: 05.01.1999 FR 9900023
(43) Date de publication de la demande: 12.07.2000
(73) Titulaire: SFIM INDUSTRIES, 91300 Massy (FR)
(72) Inventeur: Audren, Jean Thierry, 78470 St. Rémy les Chevreuse (FR); Roosen, Gerald, 78720 La Celle les Bordes (FR); Delaye, Philippe, 75010 Paris (FR)
(74) Mandataire: Schrimpf, Robert

(56) Documents cités:
- FR-A- 2 754 893
- US-A- 4 944 591

## Description

La présente invention est relative aux gyroscopes à fibres optiques.

La demanderesse a déjà proposé dans sa demande de brevet FR 2.754.893 une structure de gyroscope à effet Sagnac présentant une boucle à fibre optique multimode dans laquelle est disposé un miroir à double conjugaison de phase. La lumière arrivant sur ledit miroir d'un côté de celui-ci constitue l'onde de pompe pour la lumière arrivant sur ledit miroir de l'autre côté de celui-ci et réciproquement.

Une telle structure de gyroscope optique permet de disposer de la même sensibilité à la fois pour des déphasages rapides et des déphasages plus lents.

En outre, elle présente des avantages en termes de coûts, étant donné que les fibres multimodes sont moins chères que les fibres monomodes à conservation de polarisation généralement utilisées dans les gyroscopes à effet Sagnac.

Toutefois, les fibres multimodes sont d'un gros diamètre et conduisent pour les bobines des gyroscopes à un encombrement d'autant plus important que les longueurs de fibres utilisées sont elles-mêmes importantes.

Par ailleurs, la décomposition modale ― ou figure de speckle ― en sortie des fibres multimodes s'avère très sensible aux variations de certains paramètres externes, tels que la température ou les vibrations, qui sont susceptibles d'y engendrer des variations locales d'indices. Ceci oblige à isoler la bobine par rapport aux sollicitations extérieures.

Un but de l'invention est de proposer une structure de gyroscopes à fibres optiques à effet Sagnac qui ne présente pas ces inconvénients.

A cet effet, l'invention propose un gyroscope comportant une source pour l'émission d'un faisceau lumineux, une bouclé de fibre optique dans laquelle la lumière se propage dans un sens et dans l'autre, un miroir à double conjugaison de phase disposé dans ladite boucle de façon que la lumière arrive sur ledit miroir d'un côté et de l'autre de celui-ci, des moyens de recombinaison pour recombiner la lumière qui s'est propagée dans la boucle, des moyens de détection pour détecter le signal recombiné, caractérisé en ce que la boucle comporte une fibre monomode sans conservation de polarisation et en ce que des moyens de dépolarisation sont disposés entre ladite fibre et le miroir à conjugaison de phase, de part et d'autre de celui-ci.

D'autres caractéristiques et avantages de l'invention ressortiront encore de la description qui suit d'un mode de réalisation de l'invention. Cette description est purement illustrative et non limitative. Elle doit être lue en regard des figures annexées sur lesquelles :
- la figure 1 est une représentation schématique d'un gyroscope à fibres optiques conforme à un mode de réalisation possible de l'invention ;
- la figure 2 représente schématiquement en vue en perspective la partie médiane de la boucle à fibres optiques du gyroscope bobinée sur son mandrin.

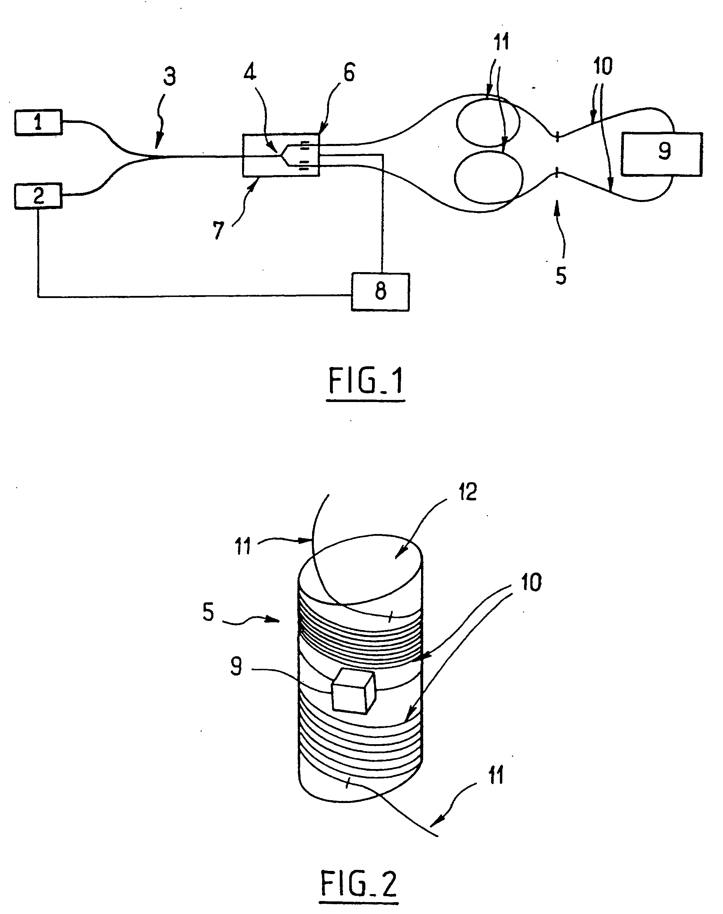

Le gyroscope à effet Sagnac de la figure 1 comporte un module d'émission laser 1 et un module de détection 2 reliés par un coupleur 3 et une jonction 4 en Y à une boucle 5 de fibre optique.

La jonction 4 est intégrée, avec des moyens de modulation 6 disposés en entrée de la boucle 5 sur l'un et l'autre des deux bras de celle-ci, dans un circuit optique 7.

Ces moyens de modulation 6 sont commandés par une unité de traitement 8 sur laquelle les signaux électriques ou numériques en sortie du module 2 sont envoyés.

La boucle 5 comporte en sa partie médiane une portion 10 de fibre multimode dans laquelle est intégré un dispositif 9, qui constitue un miroir à double conjugaison de phase.

Le reste de ladite boucle 5 est en une fibre optique monomode 11 sans conservation de polarisation.

La conjugaison de phase d'un côté et de l'autre du miroir à double conjugaison de phase que constitue le dispositif 9 est pompée par l'onde arrivant sur ledit dispositif du côté opposé à celui d'où repart l'onde conjuguée.

Ainsi que cela a été expliqué dans la demande de brevet FR 2.754.893 à laquelle on pourra avantageusement se référer, la sensibilité du gyroscope est la même pour des déphasages rapides et des déphasages lents.

Le miroir 9 à double conjugaison de phase est par exemple constitué par un cristal de BSO.

Les portions 11 de fibre monomode ne permettent de transmettre qu'une seule polarisation qui, si elle varie peu en présence de perturbations rapides telles que des vibrations, évolue beaucoup dans le temps, ainsi qu'avec la température. C'est pourquoi la portion 10 de fibre optique multimode est choisie suffisamment longue pour permettre une décomposition modale (ou figure de speckle) autorisant le fonctionnement du miroir 9 à double conjugaison de phase.

Une longueur de l'ordre de 1 m ou supérieure est préférée.

Les deux parties de fibre qui constituent la portion 10 multimode sont de préférence rigidement fixées sur le support du miroir à double conjugaison de phase, de manière à ce que l'ensemble ne fasse qu'un bloc pour les vibrations.

Pour éviter que ce bloc se déforme sous l'effet des vibrations, on le réalise petit et compact.

Ainsi que représenté sur la figure 2, le support est avantageusement constitué par un mandrin 12 dont le miroir à double conjugaison de phase 9 est solidaire. Les portions 11 de fibre multimode peuvent par exemple être collées sur ledit mandrin 12. L'ensemble de la boucle 5 est bobiné sur ce mandrin 12. En variante, il peut être prévu que ce mandrin 12 soit complété par un deuxième mandrin.

Le ou les mandrins peuvent être en différents matériaux. Avantageusement, on choisit un matériau dont le coefficient de dilatation correspond sensiblement à celui de la fibre, tel que le verre ou le métal commercialisé sous la marque "dilver".

D'autres variantes de réalisation sont bien entendu possibles. Notamment, la dépolarisation en amont du miroir à double conjugaison de phase peut être réalisée par d'autres moyens de dépolarisation que des portions de fibre multimode, dès lors que ces moyens de dépolarisation sont disposés de part et d'autre dudit miroir à conjugaison de phase et sont réciproques.

De tels moyens de dépolarisation peuvent par exemple avantageusement être constitués par les faces d'entrée dépolies du miroir à double conjugaison de phase.

## Revendications

1. Gyroscope comportant une source (1) pour l'émission d'un faisceau lumineux, une boucle (5) de fibre optique dans laquelle la lumière se propage dans un sens et dans l'autre, un miroir (9) à double conjugaison de phase disposé dans ladite boucle (5) de façon que la-lumière arrive sur ledit miroir (5) d'un côté et de l'autre de celui-ci, des moyens de recombinaison (4) pour recombiner la lumière qui s'est propagée dans la boucle, des moyens de détection (2) pour détecter le signal recombiné, **caractérisé en ce que** la boucle (5) comporte une fibre monomode (11) sans conservation de polarisation et **en ce que** des moyens de dépolarisation (10) sont disposés entre ladite fibre (11) et le miroir à conjugaison de phase (9), de part et d'autre de celui-ci.

2. Gyroscope selon la revendication 1, **caractérisé en ce que** les moyens de dépolarisation sont constitués par des portions de fibre multimode (11).

3. Gyroscope selon la revendication 2, **caractérisé en ce que** la longueur des portions de fibre multimode (11) dans la boucle est de l'ordre de 1 m ou supérieure.

4. Gyroscope selon l'une des revendications 2 ou 3, **caractérisé en ce que** les portions de fibre multimode (11) sont rigidement fixées sur un support sur lequel le miroir à double conjugaison de phase est également fixé.

5. Gyroscope selon la revendication 4, **caractérisé en ce que** les portions de fibre multimode (11) sont fixées rigidement sur un mandrin (12) qui sert de support pour le miroir à double conjugaison de phase.

6. Gyroscope selon la revendication 5, **caractérisé en ce que** les portions de fibre multimode sont collées sur le mandrin (12).

7. Gyroscope selon l'une des revendications 5 et 6, **caractérisé en ce que** le mandrin (12) est en un matériau à coefficient de dilatation égal ou voisin à celui de la fibre.

8. Gyroscope selon la revendication 7, **caractérisé en ce que** le matériau du mandrin (12) est le verre ou un métal de type « dilver ».

9. Gyroscope selon l'une des revendications 5 à 8, **caractérisé en ce que** la fibre de la boucle est bobinée sur deux mandrins.

10. Gyroscope selon la revendication 1, **caractérisé en ce que** les faces d'entrée du miroir à double conjugaison de phase sont dépolies.

## Patentansprüche

1. Gyroskop, das folgendes umfaßt: eine Quelle (1) für die Emission eines Lichtstrahls, eine optische Faserschleife (5), in der sich das Licht in der einen und der anderen Richtung ausbreitet, einen doppeltphasenkonjugierenden Spiegel (9), der in der Schleife (5) derart angeordnet ist, daß das Licht am Spiegel (5) an dessen einer Seite und an dessen anderen Seite ankommt, Rekombinationsmittel (4) zum Rekombinieren des Lichtes, das sich in der Schleife ausgebreitet hat, Detektionsmittel (2) zum Detektieren des rekombinierten Signals, **dadurch gekennzeichnet, daß** die Schleife (5) eine nicht-polarisationserhaltende Monomode-Faser (11) aufweist, und daß Polarisationsmittel (10) zwischen der Faser (11) und dem doppeltphasenkonjugierenden Spiegel (9) angeordnet sind, an dessen beiden Seiten.

2. Gyroskop nach Anspruch 1, **dadurch gekennzeichnet, daß** die Depolarisationsmittel aus Multimode-Faserabschnitten (11) gebildet sind.

3. Gyroskop nach Anspruch 2, **dadurch gekennzeichnet, daß** die Länge der Multimode-Faserabschnitte (11) in der Schleife in der Größenordnung von 1 m oder größer ist.

4. Gyroskop nach Anspruch 2 oder 3, **dadurch gekennzeichnet, daß** die Multimode-Faserabschnitte (11) starr an einem Träger befestigt sind, an dem auch der doppeltphasenkonjugierende Spiegel befestigt ist.

5. Gyroskop nach Anspruch 4, **dadurch gekennzeichnet, daß** die Multimode-Faserabschnitte (11) starr an einem Wikkelkörper (12) befestigt sind, der als Träger für den doppeltphasenkonjugierenden Spiegel dient.

6. Gyroskop nach Anspruch 5, **dadurch gekennzeichnet, daß** die Multimode-Faserabschnitte an den Wickelkörper (12) geklebt sind.

7. Gyroskop nach Anspruch 5 oder 6, **dadurch gekennzeichnet, daß** der Wickelkörper (12) aus einem Material mit einem Ausdehnungskoeffizienten gleich oder ähnlich dem der Faser ist.

8. Gyroskop nach Anspruch 7, **dadurch gekennzeichnet, daß** das Material des Wickelkörpers (12) Glas oder ein Metall vom "Dilver"-Typ ist.

9. Gyroskop nach einem der Ansprüche 5 bis 8, **dadurch gekennzeichnet, daß** die Faser der Schleife auf zwei Wikkelkörpern aufgewickelt ist.

10. Gyroskop nach Anspruch 1, **dadurch gekennzeichnet, daß** die Eingangsflächen des doppeltphasenkonjugierenden Spiegels matt poliert sind.

## Claims

1. A gyroscope comprising a source (1) for emitting a light beam, an optical fiber loop (5) in which the light propagates in both directions, a dual phase-conjugate mirror (9) disposed in said loop (5) in such a manner that light reaches said mirror (5) from both sides thereof, recombination means (4) for recombining the light which has propagated round the loop, and detector means (2) for detecting the recombined signal, the gyroscope being **characterized in that** the loop (5) includes a monomode fiber (11) that does not conserve polarization and **in that** depolarization means (10) are disposed between said fiber (11) and the phase-conjugate mirror (9), on either side thereof.

2. A gyroscope according to claim 1, **characterized in that** the depolarization means are constituted by segments of multimode fiber (11 ).

3. A gyroscope according to claim 2, **characterized in that** the length of the segments of multimode fiber (11) in the loop is of the order of 1 m or greater.

4. A gyroscope according to claim 2 or 3, **characterized in that** the multimode fiber segments (11) are rigidly fixed to a support on which the dual phase-conjugate mirror is also fixed.

5. A gyroscope according to claim 4, **characterized in that** the multimode fiber segments (11) are rigidly fixed on a core (12) which serves as a support for the dual phase-conjugate mirror.

6. A gyroscope according to claim 5, **characterized in that** the multimode fiber segments are stuck to the core (12) by adhesive.

7. A gyroscope according to claim 5 or 6, **characterized in that** the core (12) is made of a material whose coefficient of expansion is equal or close to that of the fiber.

8. A gyroscope according to claim 7, **characterized in that** the material of the core (12) is glass or a metal of the "Dilver" type.

9. A gyroscope according to any one of claims 5 to 8, **characterized in that** the fiber of the loop is coiled on two cores.

10. A gyroscope according to claim 1, **characterized in that** the inlet faces of the dual phase-conjugate mirror are frosted.
